# EUROPÄISCHE PATENTANMELDUNG

(11) **EP 4 002 632 A1**
(43) Veröffentlichungstag der Anmeldung: **25.05.2022**
(21) Anmeldenummer: 20207500.8
(22) Anmeldetag: 13.11.2020
(51) Int. Cl.: H02J 3/18, F03D 7/02, F03D 7/04, F03D 9/25, H02J 3/50

(54) **VERFAHREN ZUR BEREITSTELLUNG VON BLINDLEISTUNG**

(71) Anmelder: Wobben Properties GmbH, 26607 Aurich (DE)
(72) Erfinder: BROMBACH, Johannes, 13437 Berlin (DE)
(74) Vertreter: Eisenführ Speiser

(57) **Zusammenfassung**

Die vorliegende Erfindung betrifft ein Verfahren zum Steuern einer elektrischen Anlage, insbesondere einer Windenergieanlage oder eines Windparks, umfassend die Schritte: Bestimmen eines, innerhalb eines elektrischen Versorgungsnetzes bestimmten Ortes, mit welchem die elektrische Anlage elektrisch über das elektrische Versorgungsnetz verbunden ist; Bestimmen einer elektrischen Größe, die eine elektrische Distanz zwischen der elektrischen Anlage und dem bestimmten Ort abbildet; Ermitteln einer potentiellen Blindleistung der elektrischen Anlage für den bestimmten Ort in Abhängigkeit der elektrischen Größe, die eine elektrische Distanz zwischen der elektrischen Anlage und dem bestimmten Ort abbildet.

## Beschreibung

Die vorliegende Erfindung betrifft ein Verfahren zum Steuern einer elektrischen Anlage, insbesondere einer Windenergieanlage, sowie ein Verfahren zum Steuern eines elektrischen Versorgungsnetzes.

Elektrische Versorgungsnetze und deren Betriebsführung, insbesondere durch einen Netzbetreiber, sind allgemein bekannt.

Unter anderem wird für eine ordnungsgemäße Betriebsführung eines elektrischen Versorgungsnetzes eine hinreichende Blindleistung bzw. hinreichende Blindleistungskompensation innerhalb des elektrischen Versorgungsnetzes benötigt.

Aufgabe der vorliegenden Erfindung ist es daher, eines der oben genannten Probleme zu adressieren. Insbesondere soll eine Möglichkeit geschaffen werden, auf einfache Weise Blindleistung für einen Netzbetreiber bereitzustellen. Bevorzugt soll eine möglichst genaue Vorhersage einer technisch möglichen Blindleistung für eine definierte Lokalität bereitgestellt werden. Zumindest soll aber eine Alternative zu bisher Bekanntem bereitgestellt werden.

Erfindungsgemäß wird somit ein Verfahren zum Steuern einer elektrischen Anlage, insbesondere einer Windenergieanlage oder eines Windparks, vorgeschlagen, umfassend die Schritte: Bestimmen eines, innerhalb eines elektrischen Versorgungsnetzes bestimmten Ortes, mit welchem die elektrische Anlage elektrisch über das elektrische Versorgungsnetz verbunden ist; Bestimmen einer elektrischen Größe, die eine elektrische Distanz zwischen der elektrischen Anlage und dem bestimmten Ort abbildet; Ermitteln einer potentiellen Blindleistung der elektrischen Anlage für den bestimmten Ort in Abhängigkeit der elektrischen Größe, die eine elektrische Distanz zwischen der elektrischen Anlage und dem bestimmten Ort abbildet.

Es wird also insbesondere ein Verfahren zur technischen Aggregation von Blindleistung innerhalb eines elektrischen Versorgungsnetzes vorgeschlagen, bei dem insbesondere eine potentielle bzw. technisch mögliche Blindleistung einer elektrischen Anlage für einen bestimmten Ort bzw. Punkt im elektrischen Versorgungsnetz bestimmt wird.

Unter einer elektrischen Anlage werden hierin insbesondere Zusammenschlüsse elektrischer Betriebsmittel verstanden, die als Ganzes oder in einzelnen Teilen dem Anwenden elektrischer Energie, also insbesondere dem Erzeugen, Verteilen und Speichern von Energie, dienen. Hierunter sind insbesondere auch all jene Einspeiser, also Erzeuger, Speicher und Wandler, zu verstehen, die dazu eingerichtet sind, insbesondere mittels eines Umrichters, elektrische Leistung mit einem elektrischen Versorgungsnetz auszutauschen. Es handelt sich also bei den hierin beschriebenen elektrischen Anlagen insbesondere um Windenergieanlagen, Photovoltaikanlagen, elektrische Speicher und weitere umrichterbasierte Netzinstallationen, wie bspw. STATCOMS oder FACTS, sowie Zusammenschlüsse davon.

In einem ersten Schritt des Verfahrens wird ein bestimmter Ort innerhalb des elektrischen Versorgungsnetzes bestimmt, mit welchem die elektrische Anlage elektrisch verbunden ist, bspw. über eine elektrische Leitung des elektrischen Versorgungsnetzes.

Der bestimmte Ort ist dabei bevorzugt ein, insbesondere elektrischer, Punkt innerhalb des elektrischen Versorgungsnetzes, also bspw. ein bestimmter Streckenabschnitt einer Freileitung, ein Transformator, ein Umspannwerk oder dergleichen. Insbesondere ist der bestimmte Ort ein elektrischer Punkt, welches in einer Netzwerkberechnung und/oder load-flow study und/oder power-flow study abbildbar ist.

Das Bestimmen des bestimmten Ortes kann bspw. durch die elektrische Anlage und/oder durch den Netzbetreiber erfolgen. Der Netzbetreiber stellt bspw. fest, dass ein Streckenabschnitt innerhalb des elektrischen Versorgungsnetzes eine zu niedrige Spannung aufweist und wählt diesen Streckenabschnitt als bestimmten Ort aus.

In einem weiteren Schritt des Verfahrens wird eine elektrische Größe bestimmt, die eine elektrische Distanz zwischen der elektrischen Anlage und dem bestimmten Ort abbildet.

Bevorzugt ist diese elektrische Größe eine, insbesondere wirksame, Impedanz zwischen der elektrischen Anlage und dem bestimmten Ort, bevorzugt eine Ersatzimpedanz zwischen der elektrischen Anlage und dem bestimmten Ort. Es wird also insbesondere vorgeschlagen, die elektrisch wirksame Distanz zwischen der elektrischen Anlage und dem bestimmten Ort bei der Blindleistungsbereitstellung zu berücksichtigen.

Sowohl das Bestimmen des Ortes als auch das Bestimmen der elektrischen Größe können dabei sowohl innerhalb der elektrischen Anlage als auch durch den Netzbetreiber erfolgen. Auch kann die elektrische Anlage das eine und der Netzbetreiber das andere bestimmen.

In einer bevorzugten Ausführungsform bestimmt der Netzbetreiber sowohl den Ort als auch die elektrische Größe und übermittelt wenigstens die elektrische Größe an die elektrische Anlage.

In einem weiteren Schritt des Verfahrens wird eine technisch mögliche bzw. potentielle Blindleistung der elektrischen Anlage für den bestimmten Ort in Abhängigkeit der elektrischen Größe ermittelt, bspw. unter Verwendung eines einfachen Zwei- oder Vierpolmodells oder eines Modells eines starren Netzes.

Es wird also insbesondere vorgeschlagen, die technisch mögliche bzw. potentielle Blindleistung unter Berücksichtigung der Netztopologie zu ermitteln.

Das Ermitteln der potentiellen Blindleistung erfolgt dabei bevorzugt durch die elektrische Anlage selbst, insbesondere unter Berücksichtigung eines Arbeitspunktes der elektrischen Anlage.

Vorzugsweise umfasst das Verfahren ferner den Schritt: Übermitteln der ermittelten potentiellen Blindleistung an einen Netzbetreiber.

Es wird also insbesondere auch vorgeschlagen, die ermittelte potentielle Blindleistung dem Netzbetreiber zur Verfügung zu stellen, insbesondere damit der Netzbetreiber diese ermittelte potentielle Blindleistung bei Bedarf bei der elektrischen Anlage in voller Höhe abrufen kann.

Vorzugsweise umfasst das Verfahren ferner den Schritt: Erzeugen und Einspeisen der potentiellen Blindleistung in das elektrische Versorgungsnetz.

Es wird also ferner auch vorgeschlagen, die ermittelte potentielle Blindleistung in das elektrische Versorgungsnetz einzuspeisen, insbesondere wenn der Netzbetreiber dies wünscht.

Sofern also bspw. der Netzbetreiber die ermittelte potentielle Blindleistung zur Spannungshebung an einem bestimmten Ort innerhalb des elektrischen Versorgungsnetzes benötigt, kann der Netzbetreiber diese potentielle Blindleistung bei der elektrischen Anlage abrufen bzw. anfordern. Die elektrische Anlage erzeugt dann diese, insbesondere durch den Netzbetreiber angeforderte, Blindleistung und speist diese dann auch in das elektrische Versorgungsnetz ein.

Es ist bspw. auch möglich, dass die elektrische Anlage 1,5 MVAr Blindleistungsstellbereich hat, 1MVar als potentielle Blindleistung ermittelt und an den Netzbetreiber meldet, der Netzbetreiber aber nur 0,5MVar benötigt und die bei der elektrischen Anlage anfordert.

Es wird somit insbesondere auch vorgeschlagen, eine benötigte Blindleistung für einen bestimmten Ort zu bestimmen und diese an einem anderen Ort zu erzeugen. Die von der elektrischen Anlage erzeugte und/oder verbrauchte Blindleistung ist somit dem Betrage nach stets größer als jene, für den bestimmten Ort benötigte Blindleistung.

Insoweit wird insbesondere auch vorgeschlagen, auf einen bestimmten Punkt im elektrischen Versorgungsnetz zu regeln.

Vorzugsweise erfolgt das Ermitteln der potentiellen Blindleistung zusätzlich in Abhängigkeit eines Arbeitspunktes der elektrischen Anlage.

Es wird also insbesondere auch vorgeschlagen, dass die potentielle Blindleistung unter Berücksichtigung des Arbeitspunktes der elektrischen Anlage ermittelt wird.

Die potentielle Blindleistung ist also insbesondere als technisch mögliche Blindleistung der elektrischen Anlage zu verstehen, also insbesondere die Blindleistung, die die elektrische Anlage bereit wäre, für das elektrische Versorgungsnetz bereitzustellen. So ist, bspw. in einem Fall, der Stromrichter der elektrischen Anlage bereits zu 80 Prozent der Stromrichter-Nenn-Leistung auf Grund von Wirkleistungseinspeisung ausgelastet. Die elektrische Anlage kann dann nur 20 Prozent der Stromrichter-Nenn-Leistung als Blindleistung für das elektrische Versorgungsnetz bereitstellen. In einem anderen Fall herrscht bspw. eine Windflaute und die elektrische Anlage in Form einer Windenergieanlage kann überhaupt keine elektrische Leistung und somit auch keine Blindleistung erzeugen und insoweit auch keine Blindleistung für das elektrische Versorgungsnetz bereitstellen.

Vorzugsweise erfolgt das Bestimmen des Arbeitspunktes der elektrischen Anlage in Abhängigkeit einer, insbesondere von einem Netzbetreiber, angefragten Blindleistung.

Es wird also insbesondere auch vorgeschlagen, dass bei der Bestimmung des Arbeitspunktes der elektrischen Anlage ebenfalls eine bzw. die vom Netzbetreiber angefragte Blindleistung berücksichtigt wird.

Der Netzbetreiber fragt also insbesondere bei der elektrischen Anlage an, ob die elektrische Anlage auf Grund der vorherrschenden Situation dazu in der Lage ist, eine bestimmte Menge an Blindleistung bereitzustellen. Die elektrische Anlage berücksichtigt dies bei der Ermittlung der Blindleistung.

In einer Ausführungsform des Verfahrens wird also Seitens des Netzbetreibers angefragt, in welcher Höhe eine Blindleistungsbereitstellung durch die elektrische Anlage möglich wäre.

In einer anderen Ausführungsform des Verfahren wird Seitens des Netzbetreibers angefragt, ob eine bestimmte Menge an Blindleistung durch die elektrische Anlage bereitgestellt werden könnte.

Vorzugsweise wird der bestimmte Ort von einem bzw. dem Netzbetreiber des elektrischen Versorgungsnetzes vorgegeben.

Es wird also insbesondere auch vorgeschlagen, dass der Netzbetreiber jene Orte bzw. Punkte im elektrischen Versorgungsnetz ermittelt, welche Blindleistung zur Spannungshebung bzw. -Stützung benötigen. Zudem fragt der Netzbetreiber dann ferner bei den elektrischen Anlagen an, ob und/oder in welcher Höhe sie an einer Blindleistungsbereitstellung für diesen Ort teilnehmen können.

Vorzugsweise wird das vorstehend beschriebene Verfahren durch eine Windenergieanlage oder einem Windpark ausgeführt.

Es wird also insbesondere vorgeschlagen, dass die elektrische Anlage als Windenergieanlage und/oder als Windpark ausgebildet ist.

Erfindungsgemäß wird ferner ein Verfahren zum Steuern eines elektrischen Versorgungsnetzes vorgeschlagen, umfassend die Schritte: Bestimmen eines Ortes innerhalb des elektrischen Versorgungsnetzes; Vorgeben eines Blindleistungssollwerten für den bestimmten Ort; optional: Anfragen einer potentiellen Blindleistung bei wenigstens einer elektrischen Anlage für den bestimmten Ort; Empfangen wenigstens einer bzw. der potentiellen Blindleistung für den bestimmten Ort von wenigstens einer elektrischen Anlage; Anfordern einer Blindleistung bei der wenigstens einen elektrischen Anlage für den bestimmten Ort in Abhängigkeit des vorgegebenen Blindleistungssollwertes und der wenigsten einen empfangenen potentiellen Blindleistung.

Es wird also insbesondere vorgeschlagen, dass der Netzbetreiber das elektrische Versorgungsnetz mittels einer technischen Aggregation von Blindleistung steuert bzw. der Netzbetreiber Spannungshebung innerhalb des elektrischen Versorgungsnetzes mittels technischer Aggregation von Blindleistung durchführt.

Dies erfolgt insbesondere durch ein open-loop-Verfahren, bei welchem der Netzbetreiber auf einen bestimmten Ort bzw. Punkt im elektrischen Versorgungsnetz regelt.

Das Verfahren sieht dabei insbesondere vor, die elektrisch wirksame Distanz zwischen den elektrischen Anlagen und dem bestimmten Ort zu berücksichtigen.

Hierdurch weisen die elektrischen Anlagen an ihren Klemmen stets eine Blindleistung auf, die von der Blindleistung verschieden ist, die an dem bestimmten Ort benötigt wird.

Ferner wird insbesondere vorgeschlagen, dass der Netzbetreiber dabei Orte zur Spannungsstützung bzw. -hebung ausfindig macht, für diese Orte einen Blindleistungssollwert derart bestimmt, dass die Netzspannung an diesem Ort wieder in einen Normbereich, von bspw. 0,95 bis 1,05 p.u. der Netz-Nenn-Spannung, gehoben wird und in Abhängigkeit dieses Blindleistungssollwertes Blindleistung bei den elektrischen Anlagen innerhalb des elektrischen Versorgungsnetzes anfragt.

Die elektrischen Anlagen agieren dann entsprechend eines vorstehend oder nachstehend beschriebenen Verfahrens.

Vorzugsweise wird der Blindleistungssollwert derart bestimmt, dass es zu einer Spannungshebung an dem bestimmten Punkt innerhalb des elektrischen Versorgungsnetzes kommt.

Hierdurch kann es dazu kommen, dass die elektrische Anlage, je nach Bedarf, Blindleistung in das elektrische Versorgungsnetz einspeist oder Blindleistung aus dem elektrischen Versorgungsnetz entnimmt.

Vorzugsweise wird die potentielle Blindleistung mittels eines vorstehend oder nachstehend beschriebenen Verfahrens ermittelt.

Vorzugsweise weist der bestimmte Ort eine Netzspannung auf, die unterhalb einer Netz-Nenn-Spannung liegt, insbesondere unterhalb 0,95 p.u. der Netz-Nenn-Spannung.

Das vorstehend oder nachstehend beschriebene Verfahren wird also insbesondere für Orte bzw. Punkte im elektrischen Versorgungsnetz verwendet, die eine Unterspannung aufweisen, also eine Spannung unterhalb der Nennspannung.

Bevorzugt liegt die Netzspannung dabei unterhalb 0,95 p.u. der Netz-Nenn-Spannung.

Besonders bevorzugt liegt die Netzspannung dabei unterhalb 0,9 p.u. der Netz-Nenn-Spannung.

Ganz besonders bevorzugt liegt die Netzspannung dabei unterhalb 0,8 oder 0,85 p.u. der Netz-Nenn-Spannung.

Vorzugsweise erfolgt das Anfordern der Blindleistung in einem iterativen Verfahren.

Es wird also insbesondere vorgeschlagen, dass sich der Netzbetreiber und die elektrische Anlage zur Aggregation der Blindleistung in einem ständigen Austausch bzw. iterativen Prozess befinden, in welchem sowohl der Netzbetreiber als auch die elektrische Anlage ihre Anfragen und Antworten hinsichtlich der Blindleistung aktualisieren.

Ein solcher, iterativer, Prozess kann bspw. mittels oder ähnlich wie bei einer power-flow study oder load-flow study durchgeführt werden.

Es wird also insbesondere auch vorgeschlagen, dass iterative Verfahren mittels einer nummerischen Analyse durchzuführen.

Erfindungsgemäß wird ferner eine Windenergieanlage vorgeschlagen, umfassend: eine Steuereinheit, die dazu eingerichtet ist, ein vorstehend oder nachstehend beschriebenes Verfahren auszuführen, wobei die Steuereinheit eine Schnittstelle aufweist, die dazu eingerichtet ist, Daten von einem Netzbetreiber zu empfangen und/oder Daten an den Netzbetreiber zu senden.

Erfindungsgemäß wird ferner ein Windpark vorgeschlagen, umfassend: eine Windparksteuereinheit, die dazu eingerichtet ist, ein vorstehend oder nachstehend beschriebenes Verfahren auszuführen, wobei die Windparksteuereinheit eine Schnittstelle aufweist, die dazu eingerichtet ist, Daten von einem Netzbetreiber zu empfangen und/oder Daten an den Netzbetreiber zu senden.

Die vorliegende Erfindung wird nun nachfolgend exemplarisch anhand von Ausführungsbeispielen unter Bezugnahme auf die begleitenden Figuren näher erläutert, wobei für gleiche oder ähnliche Baugruppen dieselben Bezugszeichen verwendet werden.
- Fig. 1: zeigt eine schematische Ansicht einer Windenergieanlage gemäß einer Ausführungsform.
- Fig. 2A: zeigt einen Aufbau eines elektrischen Versorgungsnetzes mit einer Windenergieanlage gemäß einer Ausführungsform.
- Fig. 2B: zeigt einen weiteren Aufbau eines elektrischen Versorgungsnetzes mit einer Windenergieanlage gemäß einer Ausführungsform.
- Fig. 3: zeigt einen schematischen Ablauf eines Verfahrens zum Steuern einer Windenergieanlage in einer Ausführungsform.

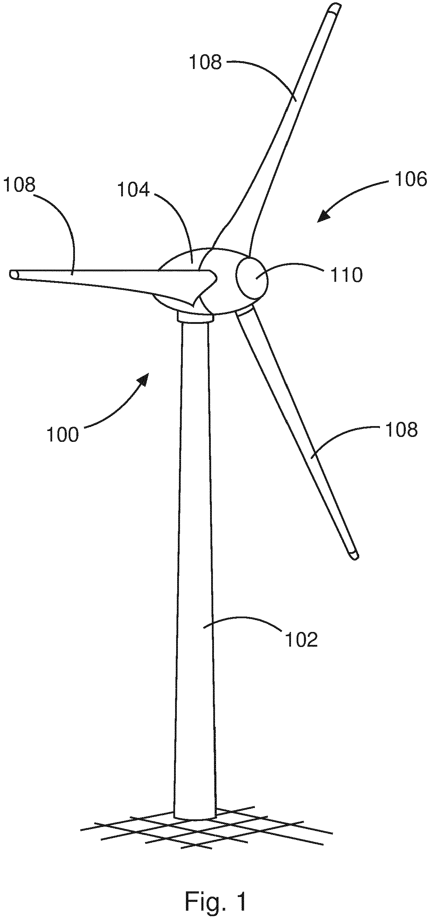

Fig. 1 zeigt eine schematische Ansicht einer Windenergieanlage 100 gemäß einer Ausführungsform.

Die Windenergieanlage 100 weist einen Turm 102 und eine Gondel 104 auf.

An der Gondel 104 ist ein aerodynamischer Rotor 106 mit drei Rotorblättern 108 und einem Spinner 110 angeordnet.

Der Rotor 106 wird im Betrieb durch den Wind in eine Drehbewegung versetzt und treibt dadurch einen Generator in der Gondel 104 an.

Der Generator ist ferner mit einem vorstehend oder nachstehend beschriebenen Stromrichter verbunden mittels dem die Windenergieanlage elektrische Leistung mit einem elektrischen Versorgungsnetz austauscht.

Die Windenergieanlage ist also insbesondere als umrichterbasierter Einspeiser ausgebildet.

Zum Betreiben der Windenergieanlage, und insbesondere des Stromrichters, ist ferner eine vorstehend oder nachstehend beschriebene Steuereinheit vorgesehen, insbesondere, um ein vorstehend oder nachstehend beschriebenes Verfahren auszuführen und/oder daran teilzunehmen.

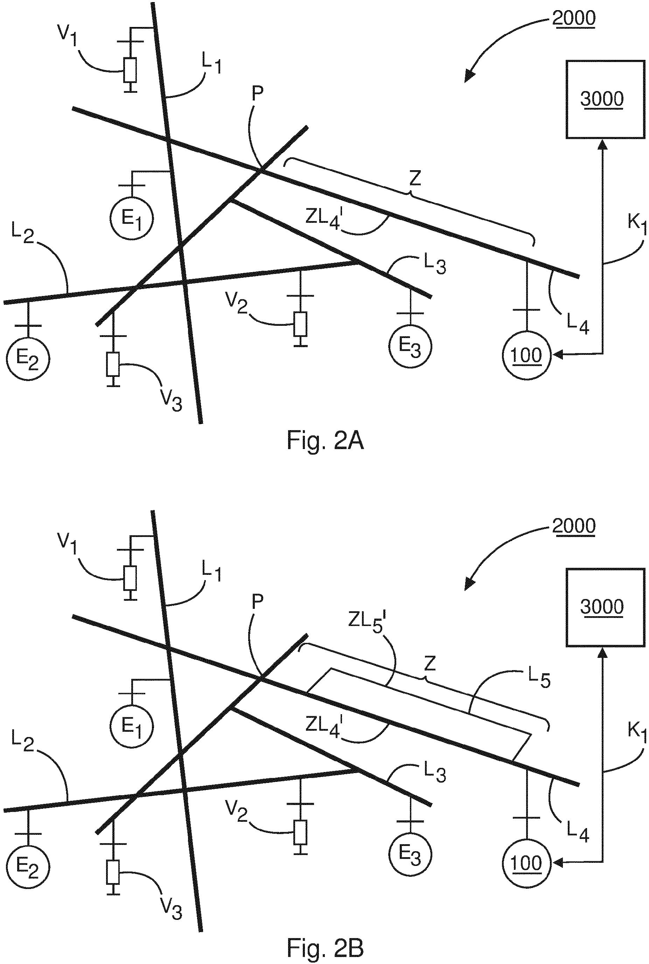

Fig. 2A zeigt einen Aufbau eines elektrischen Versorgungsnetzes 2000 mit einer Windenergieanlage 100 gemäß einer Ausführungsform.

Das elektrische Versorgungsnetz 2000 umfasst eine Vielzahl von Leitungen L1, L2, L3, L4, L5 sowie an diesen Leitungen L1, L2, L3, L4, L5 angeschlossene Erzeuger E1, E2, E3 und Verbraucher V1, V2, V3 und eine Windenergieanlage 100.

Die Windenergieanlage 100 ist wie vorstehend oder nachstehend beschrieben ausgebildet und steht bevorzugt stellvertretend für einen Windpark 1000.

Das elektrische Versorgungsnetz 2000 wird ferner von einem Netzbetreiber 3000 betrieben, der bspw. über eine Kommunikationsleitung K1 mit der Windenergieanlage 100 verbunden ist, insbesondere um Daten auszutauschen.

Zudem umfasst das elektrische Versorgungsnetz 2000 einen, bevorzugt vom Netzbetreiber 3000, bestimmten Ort P, an dem insbesondere die Ist-Spannung des elektrischen Versorgungsnetzes mittels der Windenergieanlage 100 angehoben werden soll, bspw., weil der bestimmte Ort P eine Unterspannung aufweist.

Zwischen dem bestimmten Ort P, der bspw. auf einem Knotenpunkt zweier elektrischer Leitungen liegt, und der Windenergieanlage 100 besteht eine elektrische Distanz, die durch die Impedanz Z wiedergegeben werden kann.

Die, insbesondere wirksame, Impedanz Z setzt sich dabei aus der Leitungsimpedanz z_{L4'} und der Leitungsimpedanz z_{L5'} zusammen. Insbesondere sorgt die abschnittsweise Parallelschaltung der Leitungen L4 und L5 für eine andere, insbesondere wirksame, Impedanz Z zwischen dem bestimmten Ort P und der Windenergieanlage 100. Im vorliegenden Fall ist die wirksame Impedanz Z somit kleiner als die, in Fig. 2A gezeigte wirksame Impedanz Z.

Auch kann zwischen dem bestimmten Ort und der elektrischen Anlage ein vermaschtes Netz liegen. In einem solchen Fall ist dann die wirksame Impedanz Z des vermaschten Netzes für das vorstehend oder nachstehend beschriebene Verfahren heranzuziehen. Um die Ist-Spannung des elektrischen Versorgungsnetzes 2000 an dem bestimmten Ort P mittels der Windenergieanlage 100 anzuheben, wird das vorstehend oder nachstehend beschriebene Verfahren ausgeführt.

Fig. 2B zeigt einen weiteren Aufbau eines elektrischen Versorgungsnetzes 2000 mit einer Windenergieanlage 100 gemäß einer Ausführungsform.

Das elektrische Versorgungsnetz 2000 umfasst eine Vielzahl von Leitungen L1, L2, L3, L4 sowie an diesen Leitungen L1, L2, L3, L4 angeschlossene Erzeuger E1, E2, E3 und Verbraucher V1, V2, V3 und eine Windenergieanlage 100.

Die Windenergieanlage 100 ist wie vorstehend oder nachstehend beschrieben ausgebildet und steht bevorzugt stellvertretend für einen Windpark 1000.

Das elektrische Versorgungsnetz 2000 wird ferner von einem Netzbetreiber 3000 betrieben, der bspw. über eine Kommunikationsleitung K1 mit der Windenergieanlage 100 verbunden ist, insbesondere um Daten auszutauschen.

Zudem umfasst das elektrische Versorgungsnetz 2000 einen, bevorzugt vom Netzbetreiber 3000, bestimmten Ort P, an dem insbesondere die Ist-Spannung des elektrischen Versorgungsnetzes mittels der Windenergieanlage 100 angehoben werden soll, bspw., weil der bestimmte Ort P eine Unterspannung aufweist.

Zwischen dem bestimmten Ort P, der bspw. auf einem Knotenpunkt zweier elektrischer Leitungen liegt, und der Windenergieanlage 100 besteht eine elektrische Distanz, die durch die Impedanz Z wiedergegeben werden kann.

Die, insbesondere wirksame, Impedanz Z setzt sich dabei aus der Leitungsimpedanz z_{L4'} zusammen.

Um die Ist-Spannung des elektrischen Versorgungsnetzes 2000 an dem bestimmten Ort P mittels der Windenergieanlage 100 anzuheben, wird das vorstehend oder nachstehend beschriebene Verfahren ausgeführt.

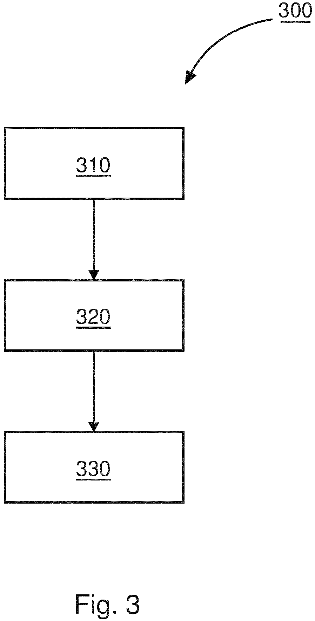

Fig. 3 zeigt einen schematischen Ablauf 300 eines Verfahrens zum Steuern einer Windenergieanlage 100 in einer Ausführungsform.

In einem ersten Schritt 310 wird ein, innerhalb eines elektrischen Versorgungsnetzes 2000 bestimmter Ort P bestimmt, mit welchem die Windenergieanlage 100 elektrisch über das elektrische Versorgungsnetz, bspw. über eine elektrische Leitung L4, verbunden ist.

In einem weiteren Schritt 320 wird eine elektrische Größe, insbesondere eine (wirksame) Impedanz Z, bestimmt, die eine elektrische Distanz zwischen der Windenergieanlage und dem bestimmten Ort P abbildet.

Anschließend wird in einem weiteren Schritt 330 eine potentielle Blindleistung der Windenergieanlage für den bestimmten Ort P in Abhängigkeit der elektrischen Größe, insbesondere der Impedanz Z, ermittelt.

Diese so ermittelte potentielle Blindleistung kann dann bspw. an einen Netzbetreiber des elektrischen Versorgungsnetzes übermittelt werden, welches die potentielle Blindleistung bei Bedarf von der Windenergieanlage oder dem Betreiber der Windenergieanlage abrufen kann, bspw., um die Ist-Spannung des elektrischen Versorgungsnetzes am bestimmten Ort P anzuheben.

Die Kommunikation zwischen der Windenergieanlage 100 und dem Netzbetreiber 3000 kann bspw. drahtgebunden oder drahtlos erfolgen.

Für die Kommunikation mit dem Netzbetreiber 3000 weist die Windenergieanlage bspw. eine vorstehend beschriebene Steuereinheit auf.

Das vorstehend beschriebene Verfahren kann ferner auch mit einem Windpark durchgeführt werden. In einem solchen Fall weist der Windpark bspw. eine Windparksteuereinheit auf, mit der, der Netzbetreiber dann kommunizieren kann.

Das vorstehend beschriebene Verfahren ist dabei besonders gut für eine, bevorzugt technische, Aggregation von elektrischer Leistung, insbesondere elektrischer Blindleistung, geeignet, bevorzugt bei Windenergieanlagen oder Windparks.

Das vorstehend beschriebene Verfahren ist also besonders gut geeignet für:
- eine Aggregation mehrerer Windparks zu einem regenerativen Kraftwerk;
- eine Netzregelung des elektrischen Versorgungsnetzes im Normalbetrieb;
- eine Netzregelung des elektrischen Versorgungsnetzes in kritischen Netzsituationen;
- eine Spannungsreglung eines Netzbetreibers des elektrischen Versorgungsnetzes;
- einen Optimized-Power-Flow-Regler eines Netzbetreibers des elektrischen Versorgungsnetzes,
insbesondere bei Verfahren, bei denen Blindleistung, insbesondere zur Spannungsstellung, benötigt wird.

### Bezuqszeichenliste

- 100: Windenergieanlage
- 102: Turm, insbesondere einer Windenergieanlage
- 104: Gondel, insbesondere einer Windenergieanlage
- 106: aerodynamischer Rotor, insbesondere einer Windenergieanlage
- 108: Rotorblatt, insbesondere einer Windenergieanlage
- 110: Spinner, insbesondere einer Windenergieanlage
- 300: Ablauf eines Verfahrens zum Steuern einer elektrischen Anlage
- 310: Bestimmen eines bestimmten Ortes
- 320: Bestimmen einer elektrischen Größe
- 330: Ermitteln einer potentiellen Blindleistung

- 1000: Windpark
- 2000: elektrisches Versorgungsnetz
- 3000: Netzbetreiber, insbesondere des elektrischen Versorgungsnetzes

- E1, E2, E3: Erzeuger, insbesondere des elektrischen Versorgungsnetzes
- K1: Kommunikationsleitung, insbesondere des Netzbetreibers
- L1, L2 ...: elektrische Leistungen, insbesondere des elektrischen Versorgungsnetzes
- L3, L4, L5: elektrische Leitungen, insbesondere des elektrischen Versorgungsnetzes
- P: bestimmter Ort, innerhalb des elektrischen Versorgungsnetzes
- V1, V2, V3: Verbraucher, insbesondere des elektrischen Versorgungsnetzes
- Z: Impedanz, insbesondere einer elektrischen Distanz
- z_{L4'}, z_{L5'}: Leitungsimpedanz

## Patentansprüche

1. Verfahren zum Steuern einer elektrischen Anlage, insbesondere einer Windenergieanlage (100) oder eines Windparks (1000), umfassend die Schritte:
- Bestimmen eines, innerhalb eines elektrischen Versorgungsnetzes (2000) bestimmten Ortes (P), mit welchem die elektrische Anlage elektrisch über das elektrische Versorgungsnetz (2000) verbunden ist;
- Bestimmen einer elektrischen Größe (Z), die eine elektrische Distanz zwischen der elektrischen Anlage und dem bestimmten Ort (P) abbildet;
- Ermitteln einer potentiellen Blindleistung (330) der elektrischen Anlage für den bestimmten Ort (P) in Abhängigkeit der elektrischen Größe (Z), die eine elektrische Distanz zwischen der elektrischen Anlage und dem bestimmten Ort (P) abbildet.

2. Verfahren zum Steuern einer elektrischen Anlage nach Anspruch 1, wobei
- die elektrische Größe eine, insbesondere wirksame, Impedanz (Z) zwischen der elektrischen Anlage und dem bestimmten Ort (P), bevorzugt eine Ersatzimpedanz zwischen der elektrischen Anlage (Z) und dem bestimmten Ort (P), ist.

3. Verfahren zum Steuern einer elektrischen Anlage nach Anspruch 1 oder 2, ferner umfassend den Schritt:
- Übermitteln der ermittelten potentiellen Blindleistung an einen Netzbetreiber (3000).

4. Verfahren zum Steuern einer elektrischen Anlage nach wenigstens einem der vorstehenden Ansprüche, ferner umfassend den Schritt:
- Erzeugen und Einspeisen der potentiellen Blindleistung in das elektrische Versorgungsnetz (2000).

5. Verfahren zum Steuern einer elektrischen Anlage nach wenigstens einem der vorstehenden Ansprüche, wobei
- das Ermitteln der potentiellen Blindleistung (330) zusätzlich in Abhängigkeit eines Arbeitspunktes der elektrischen Anlage erfolgt.

6. Verfahren zum Steuern einer elektrischen Anlage nach wenigstens einem der vorstehenden Ansprüche, wobei
- das Bestimmen des Arbeitspunktes der elektrischen Anlage in Abhängigkeit einer, insbesondere von einem Netzbetreiber (3000), angefragten Blindleistung erfolgt.

7. Verfahren zum Steuern einer elektrischen Anlage nach wenigstens einem der vorstehenden Ansprüche, wobei
- der bestimmte Ort (P) von einem bzw. dem Netzbetreiber (3000) des elektrischen Versorgungsnetzes (2000) vorgegeben wird.

8. Verfahren zum Steuern einer elektrischen Anlage nach wenigstens einem der vorstehenden Ansprüche, wobei
- wobei das ermitteln der potentiellen Blindleistung (330) in einem iterativen Verfahren mit dem Netzbetreiber (3000) erfolgt.

9. Verfahren zum Steuern einer elektrischen Anlage nach wenigstens einem der vorstehenden Ansprüche, wobei
- das Verfahren von einer Windenergieanlage (100) oder einen Windpark (1000) ausgeführt wird.

10. Verfahren zum Steuern eines elektrischen Versorgungsnetzes (2000), umfassend die Schritte:
- Bestimmen eines Ortes (P) innerhalb des elektrischen Versorgungsnetzes (2000);
- Vorgeben eines Blindleistungssollwerten für den bestimmten Ort (P);
- optional: Anfragen einer potentiellen Blindleistung (330) bei wenigstens einer elektrischen Anlage für den bestimmten Ort (P);
- Empfangen wenigstens einer bzw. der potentiellen Blindleistung für den bestimmten Ort (P) von wenigstens einer elektrischen Anlage;
- Anfordern einer Blindleistung bei der wenigstens einen elektrischen Anlage für den bestimmten Ort (P) in Abhängigkeit des vorgegebenen Blindleistungssollwertes und der wenigsten einen empfangenen potentiellen Blindleistung.

11. Verfahren zum Steuern eines elektrischen Versorgungsnetzes (2000) nach Anspruch 10, wobei
- der Blindleistungssollwert derart bestimmt wird, dass es zu einer Spannungshebung an dem bestimmten Ort (P) innerhalb des elektrischen Versorgungsnetzes (2000) kommt.

12. Verfahren zum Steuern eines elektrischen Versorgungsnetzes (2000) nach Anspruch 10 oder 11, wobei
- die potentielle Blindleistung mittels eines Verfahrens nach den Ansprüchen 1 bis 8 ermittelt wird.

13. Verfahren zum Steuern eines elektrischen Versorgungsnetzes (2000) nach wenigstens einem der Ansprüche 10 bis 12, wobei
- der bestimmte Ort (P) eine Netzspannung aufweist, die unterhalb einer Netz-Nenn-Spannung liegt, insbesondere unterhalb 0,95 p.u. der Netz-Nenn-Spannung.

14. Verfahren zum Steuern eines elektrischen Versorgungsnetzes (2000) nach wenigstens einem der Ansprüche 10 bis 13,
- wobei das Anfordern der Blindleistung in einem iterativen Verfahren erfolgt.

15. Windenergieanlage (100), umfassend:
- eine Steuereinheit, die dazu eingerichtet ist, ein Verfahren nach einem der Ansprüche 1 bis 9 auszuführen, wobei
- die Steuereinheit eine Schnittstelle aufweist, die dazu eingerichtet ist, Daten von einem Netzbetreiber (3000) zu empfangen und/oder Daten an den Netzbetreiber (3000) zu senden.

16. Windpark (1000), umfassend:
- eine Windparksteuereinheit, die dazu eingerichtet ist, ein Verfahren nach einem der Ansprüche 1 bis 9 auszuführen, wobei
- die Windparksteuereinheit eine Schnittstelle aufweist, die dazu eingerichtet ist, Daten von einem Netzbetreiber (3000) zu empfangen und/oder Daten an den Netzbetreiber (3000) zu senden.
